# EUROPEAN PATENT SPECIFICATION

(11) **EP 2 670 977 B1**
(45) Date of publication and mention of the grant of the patent: **01.05.2019**
(21) Application number: 12734295.4
(22) Date of filing: 11.01.2012
(51) Int. Cl.: F03D 13/10, B66C 1/10

(54) **A TOOL FOR MANAGEMENT OF BLADES FOR WIND TURBINES**
WERKZEUG ZUR VERWALTUNG VON SCHAUFELBLÄTTERN FÜR WINDTURBINEN
OUTIL DE MANIPULATION DE PALES POUR ÉOLIENNES

(30) Priority: 11.01.2011 DK 201100019
(43) Date of publication of application: 11.12.2013
(73) Proprietor: Liftra IP ApS, 9200 Aalborg SV (DK)
(72) Inventor: FENGER, Per. E, DK-9575 Terndrup (DK)
(86) International application number: PCT/DK2012/050013
(87) International publication number: WO 2012/095112

(56) References cited:
- EP-A1- 1 507 975
- EP-A1- 2 144 837
- WO-A1-2009/112887
- WO-A1-2010/124744
- WO-A1-2010/147480
- JP-A- 2010 265 752
- US-A1- 2010 158 654

## Description

The present invention relates to a tool for management of blades for wind turbines, and comprising a first frame with a connecting arrangement which consists of a second frame with means for connection to a wire connected to a crane or hoist for hoisting of the first frame and the blade, said first frame further comprises gripping means for engagement of the blade surface, and where the gripping means consists of at least two cooperating claw-shaped sets of gripping organs operated with first sets of actuators, where each set of gripping organs comprises a first claw shaped body and a second claw shaped body, which together in engaged position is enclosing the blade surface on each side of the maximum circumference of the blade.

Such a tool is known from WO 2010 124744 A1, in which is disclosed an auxiliary tool for handling of heavy and relatively long work pieces, in particular blades for wind turbines, and comprising a first frame with means for connection to a wire connected for hoisting of the first frame and the blade with a crane. The first frame is connected to a second frame which comprises gripping means for engagement on the blade surface, and where the gripping means consists of at least to cooperating claw shaped gripping organs, operated by first actuators, where each set comprises a first claw shaped body and a second claw shaped body, which in common in engaged position encloses the blade surface on each side of the maximum blade circumference. The tool is designed for use when installing blades on a wind turbine, but has certain limitations in connection with the mounting. For example the tool implements a tilt of the blade at an angle of maximum +/-60 degrees relative to horizontal, with the result that at least one change in the crane position is necessary to mount the blades on a wind turbine, as the blades most frequent are supplied equally orientated, which means that two of the blades can be mounted at a first crane position, whereas the third will require a movement of the crane, since the blades are so long that they in lifted position does not allow to be turned a game, as the crane jib or the tower will block the rotation. Further the use of the auxiliary tool might make it difficult, even in light winds, to position the hanging blade to align the bolt holes in the mounting flange and the bolt holes in the flange on the blade anchor. The auxiliary tool not less than four points of connection to the horizontally oriented frame, which is itself limiting the choice of the installation method. Document EP1507975A1 discloses a tool for handling blades, that can pivot around its longitudinal axis.

It is the object by the invention to provide a tool that provides a solution on the above issues, and which also is useful in mounting blades on wind turbines in virtually all positions, and thus useful for all installation methods.

A further object by the invention is to provide a tool which only requires one wire for hoisting, and which, subsequent to mounting the blade anchoring on the main shaft of the wind turbine, allows mounting of the blades on the blade anchoring in virtually all angle positions of the blade anchoring.

In addition it is the object by the invention that the tool shall provide facilities which eases the positioning between holes in the mounting flange on the blade and holes in the flange on the blade anchoring.

This object is achieved by a tool for handling blades for wind turbines, and comprising a first frame with a connecting arrangement which consists of a second frame with means for connection to a wire connected to a crane or hoist for hoisting of the first frame and the blade, said first frame further comprises gripping means for engagement of a blade surface, and where the gripping means consists of at least two cooperating claw-shaped sets of gripping organs operated with first sets of actuators, where each set of gripping organs comprises a first claw shaped organ and a second claw shaped organ, which together in engaged position is enclosing the blade surface on each side of the maximum circumference of the blade, which is characterized in, that the connecting arrangement which consists of the second frame comprises a by first pivot bearing connections pivotally mounted yoke, the free end of which comprises means for connection to a wire.

This opens for the possibility for turning the blade around its longitudinal axis so that the mounting of it is facilitated, since the adjustment of the position of the holes in the flange on the blade relative to the flange on the hub by rotating the blade around its longitudinal axis, is facilitated considerably.

This provides the possibility to compensate for size/circumference of the attachment area on the wind turbine blade, and to perform balanced lifting of a wind turbine blade in a manner that it is not affected by damaging forces during handling.

With the intent to perform rotations of the first frame, and thus the claws and a therein arranged blade for a wind turbine, the connection arrangement may comprise a second frame, protruding substantially perpendicularly from the first frame, said second frame comprising a by first pivot bearing connections pivotally mounted yoke, the free end of which comprises means for connection to a wire.

This makes it possible to compensate for the position of the blade relative to the blade anchoring as the blade can be turned around its own length axis by the pivot bearing, which will facilitate the mounting of the blade on the blade anchoring.

In a preferred embodiment of the tool, it is preferred that the second frame is protruding substantially perpendicular from the first frame.

This has the advantage that the weight of the frame contributes to balance the device when a wind turbine blade is arranged in the gripping organs.

With the intent of further facilitating the mounting of the blade on the blade anchoring, so that the holes in the mounting flanges are aligned opposite to each other, a second actuator may be arranged between the second frame and the yoke.

By the actuator, which of course is remotely controlled, it is achieved that the blade can be turned to practically any preferred position during lifting and mounting of the blade on the blade anchoring.

With the intent to ensure a certain balance between the first frame and the wire by which the tool with the blade is hoisted up and down, the second frame may comprise a counterweight in the end opposite to the end where the first frame is connected.

Hereby is achieved a certain balance during hoisting the turbine blade using the tool. The counterweight may, for example house a hydraulic pump with control boxes for controlling the actuators on the tool.

With the intent to facilitate a blade from a generally horizontal orientation to an optional upright position, a yaw may be located between the connection arrangement and the first frame.

With the intent to provide an easier operation of the yaw it may be hydraulic powered or driven by a third actuator.

Hereby it is achieved that the first frame, and accordingly the blade carried in the claws in the first frame can be rotated to an optional angle relative to an essentially horizontal base.

With the intent to use the tool on different sizes of wind turbine blades, and to enable balanced hoists, the position of the claw shaped gripping means on the first frame may be infinitely adjustable.

With the intent to compensate for size and balance point for a wind turbine blade hoisted in the claws of the tool, the position of the claw shaped gripping organs on the first frame can be adjustable by at least a third and a fourth actuator.

The advantage is, that it enables for establishing a well defined and stable momentum of gravity between the attack points of the claws on each side of the point where the circumference of the blade is largest, which will cause a further stabilization of the wind turbine blade and the frame during hoisting.

With the intent to prevent damage to the surface of the wind turbine blade where it is attacked by the claws, the against the surface of the wind turbine blade/the workpiece facing sides of the claw shaped gripping organs comprise a pad, said padding surface can be constituted of a non-slip coating.

By the non-slip coating is further achieved that the wind turbine blade does not slip during the hoist.

With the intent to enable use of commonly used cranes for hoists together with the tool, the up- and down hoisting and handling of an elongated, heavy item such as a wind turbine blade can take place using a single crane wire, which by one roll displaces the wire upwards and downwards.

The advantage thereof is, that use of the tool according to the invention allows for use of cranes with a more simple construction than the type that is required using the known tools.

With the intent to prevent unintended opening of the claws during hoisting of a wind turbine blade, the free ends of the claw shaped gripping organs may comprise cooperating locking organs for retaining the gripping organs in the closed, engaged position, where the claw shaped gripping organs encloses the surface of the blade on each side of the largest circumference of the wind turbine blade.

It is hereby achieved that the wind turbine blade arranged in the tool, is not lost during handling with the crane. This leads to an increased security for the personnel moving around in the area of operation of the crane.

In the intent to facilitate the operation of the cooperating locking organs, at least the one part of the cooperating locking organs may be displaceable between a first locked outer position, and a second not locked position.

In a preferred embodiment the actuators consists of pistons powered by a fluid under pressure, for example the pressure source arranged in the counter weight.

In another embodiment the actuators may consist of electric powered spindles and/or electric powered motors.

It is further preferred that the tool is equipped with control means, so that all the movements of the actuators and the movements of the yaw, are controllable via a control unit which can be operated from an optional position.

The invention is further enclosed below with reference to the drawing, wherein;
Fig. 1 is a perspective view of a tool according to the invention, during hoisting of a wind turbine blade,
Fig. 2 is a perspective close view if the tool shown in Fig. 1, carrying a blade for a wind turbine
Fig. 3 is a perspective view of the tool shown in Fig. 1, without a blade from a wind turbine, and
Fig. 4 is a detail perspective view of the bottom side of the claw shaped gripping organs of the tool, showing the locking means between the free ends of the gripping means.

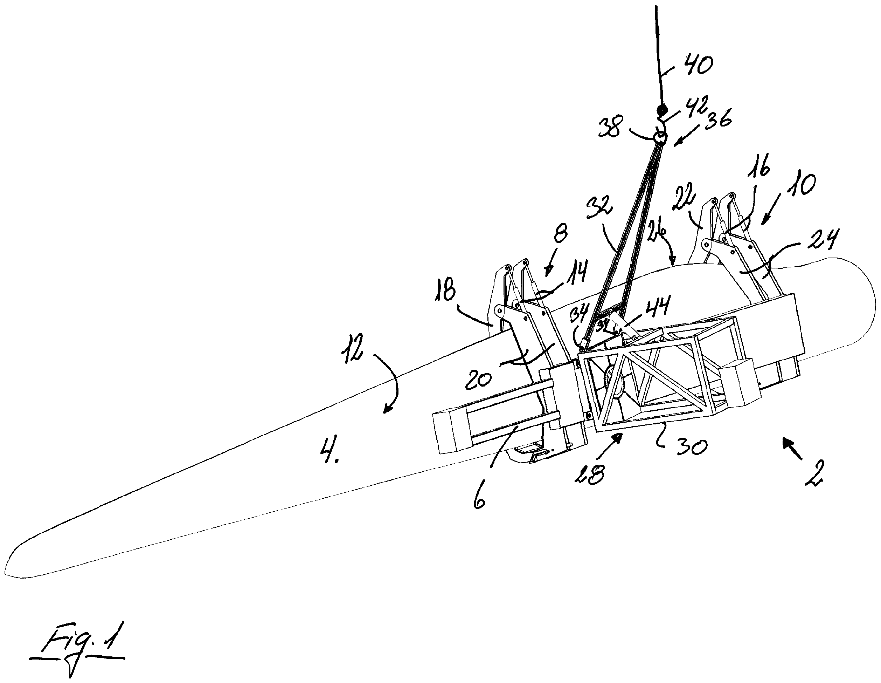

In Fig. 1 is a perspective view of an embodiment of a tool 2, according to the invention, for lift of a wind turbine blade 4.

The tool 2 comprises a first frame 6, on which is arranged a first and a second gripping organ 8, 10 for engagement of the surface 12 on a wind turbine blade 4 (not shown).

The gripping organs 8, 10 consists of at least two cooperating claw shaped set gripping organs 18, 20, 22, 24, driven by first actuators 14, 16, each set comprising a first claw-shaped organ 18, 22 and a second claw shaped organ 20, 24, which in engaged position in common encloses the surface of the wind turbine blade on each side of the maximum circumference 26 of the blade.

The position of the claw shaped gripping organs 8, 10 is continuously variable on the first frame 6. The adjustment/displacement of the claw shaped gripping organs 8, 10 may be performed by not shown actuators.

The tool 2 comprises a connection arrangement 28, which in the shown embodiment consists of a second frame 30, extending mainly perpendicular from the first frame 6, said second frame 30 comprises a pivotable yoke 32 which is secured to the second frame 30 by first pivot bearing connections 34. The free end 36 of the yoke comprises means for attachment to a wire 40 with a lift hook 42.

In the shown embodiment of the tool 2, the position of the yoke 32 is adjustable relative to the frame 30 and the frame 6 by a second actuator 44, which means that the frame 6 with the blade 4 can be turned around a line parallel with their respective center axis (not shown).

The second frame 30 comprises further a counter weight 46 in the end opposite to the first frame 6. The counter weight may besides than dead weight further consist of a hydraulic system (not shown) comprising a hydraulic pump with vessel and control unit for remote control of an electro-valve tree, from which is emitted pressurized oil or fluid for the actuator or yaw (see below) on the tool. The purpose of the counter weight is to balance the hoist of e.g. a wind turbine blade 4.

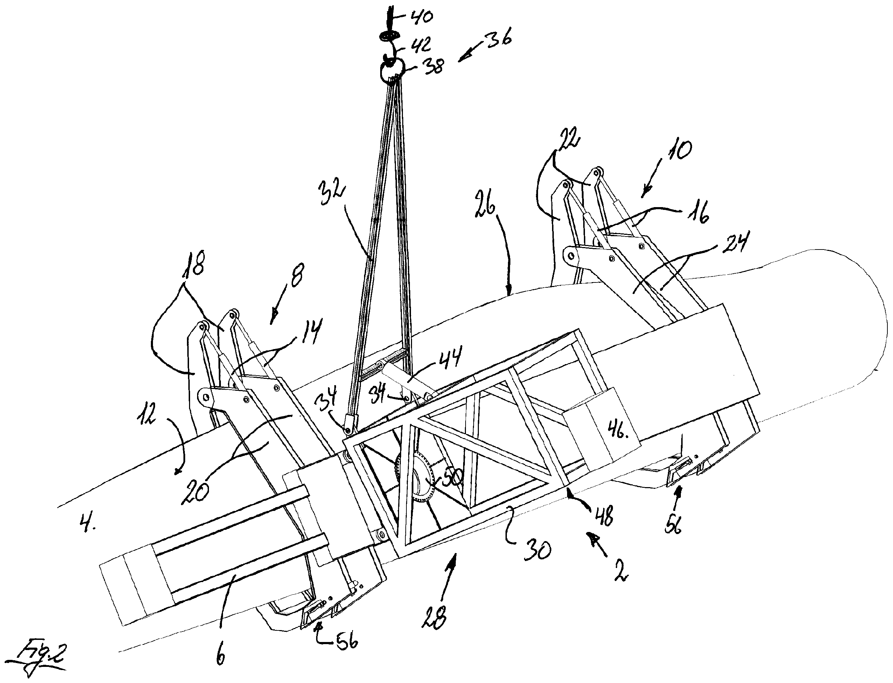

The tool 2 comprises further, as it most clearly appears in Fig. 2, a hydraulic powered yaw 50 between the connection arrangement 28 and the first frame 6. The presence of the yaw 48 results in that the blade 4 can be turned in a controlled manner from a substantially horizontal orientation as shown in Fig. 1 and Fig. 2 to a more vertically oriented mounting position. The yaw 48 may be hydraulic powered, or driven by a third actuator (not shown).

The tool 2 according to the invention may in a further embodiment be designed so that the position of the claw shaped gripping organs 8, 10 on the first frame are adjusted by a fourth actuator (not shown), and a fifth actuator (not shown).

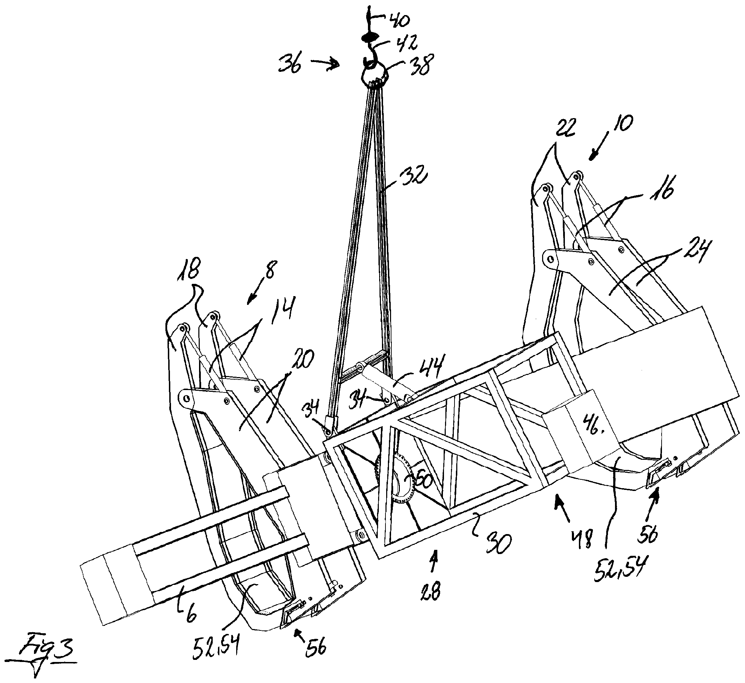

The tool 2 may further, as indicated in Fig. 3, comprise a pad 54 on the against the surface 12 of the wind turbine blade/item 4 oriented sides 52 of the claw shaped gripping organs 8, 10, the surface of said pad may consist of a non-slip coating.

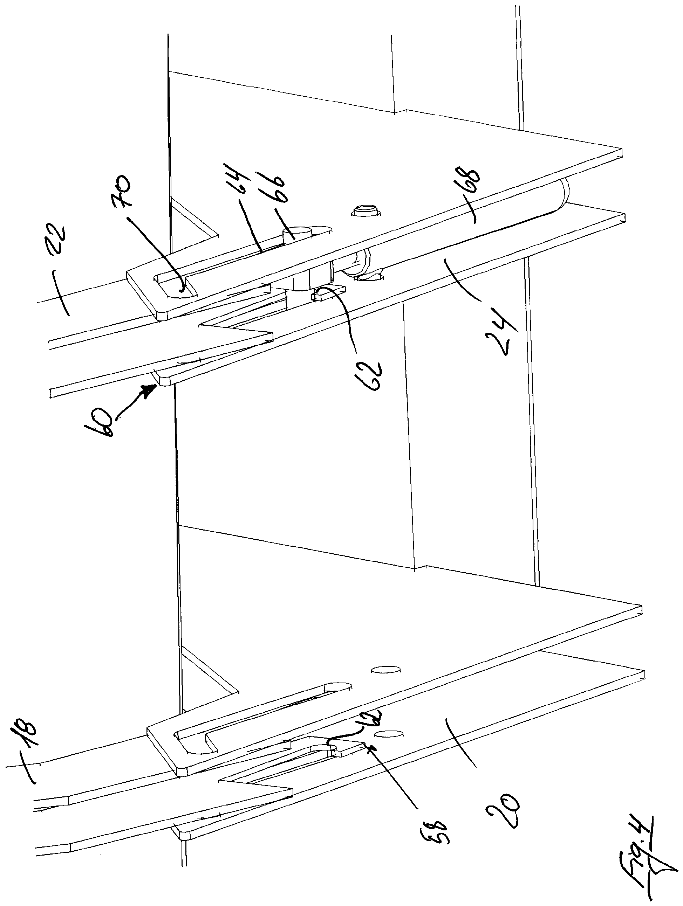

The tool 2 in the shown embodiment and as it appears from Fig. 3 and in particular in fig. 4, is further supplied with cooperating locking organs 56 in the free ends 58, 60 of the claw shaped gripping organs 8, 10. The locking organs 56 serves for locking the gripping organs in the closed engaged position, wherein the claw shaped gripping organs 18, 20, 22, 24 encloses the surface 12 of the wind turbine blade on each side of the maximum circumference 26 of the blade.

As it most clearly appears from Fig. 4, the locking means 56 consists of hook-shaped cut-outs 62 in the first claw shaped gripping organs 18, 22, which cooperates with a, in tracks 64 in the second claw shaped gripping organs 20, 24, displaceable transverse locking pin 66 in the one end of an actuator, which in the shown embodiment consists of a hydraulic powered piston 68 which is anchored in the second claw shaped gripping organs 20, 24.

The track 64 comprises an angle turn 70 closest to the free end of the claw shaped organs 20, 24 which enables the locking bolt to be displaced to a position allowing the free ends 58 of the first claw shaped gripping organs 18, 20 to pass when opening the gripping organs 8, 10, by activating the actuators 14, 16.

Locking between the first claw shaped gripping organs 18, 22 and the second claw shaped gripping organs 20, 24 takes place by displacement of the hydraulic powered piston (69) to a retracted position, wherein it enters a locking position in the hook shaped cut outs 62 in the first claw shaped gripping organs 18, 22, and thereby blocks for opening of the gripping organs (8, 10).

The tool 2 is provided so with control means that all movements of the actuators and the yaw are controllable via a control unit (not shown) from an optional position, that is, a remote control.

The inventor has realized that the invention may be embodied in other forms than those described above, but this does not change the inventive aspect to provide an auxiliary tool, which together with a simple and common used crane construction, is capable for use when lifting e.g. wind turbine blades 4, from e.g. a trailer to approximately an optional mounting position.

## Claims

1. A tool (2) for handling blades (4) for wind turbines, and comprising a first frame (6) with a connecting arrangement (28) which consists of a second frame (30) with means (38) for connection to a wire (40) connected to a crane or hoist for hoisting of the first frame and the blade (4), said first frame (6) further comprises gripping means (8, 10) for engagement of the blade surface (12), and where the gripping means consists of at least two cooperating claw-shaped sets (18, 20, 22, 24) of gripping organs driven by first sets of actuators (14, 16), where each set of gripping organs (18, 20, 22, 24) comprises a first claw shaped organ (18, 22) and a second claw shaped organ (20, 24), which together in engaged position encloses the blade (4) surface (12) on each side of the maximum circumference (26) of the blade, **characterized in, that** the connecting arrangement (28) which consists of the second frame (30) comprises a, by first pivot bearing connections (30), pivotally mounted yoke (32), the free end (36) of which comprises means (38) for connection to a wire (40).

2. Tool (2) according to claim 1, **characterized in, that** the second frame (30) is protruding substantially perpendicularly from the first frame (6).

3. Tool (2) according to claim 2, **characterized in, that** a second actuator (44) is located between the second frame (30) and the yoke (32).

4. Tool (2) according to claim 2 or claim 3, **characterized in, that** the second frame (30) comprises a counterweight (46) in the end opposite to the end where the first frame (6) is connected.

5. Tool (2) according to anyone of the claims 1-4, **characterized in, that** a yaw (50) is located between the connecting arrangement (28) and the first frame (6).

6. Tool according to claim 5, **characterized in, that** the yaw (50) is hydraulic powered or driven by a third actuator.

7. Tool (2) according to anyone of the claims 1-6, **characterized in, that** the positions on the frame (6) of the claw shaped gripping organs (8, 10) is infinitely adjustable.

8. Tool (2) according to anyone of the claims 2-7, **characterized in, that** the position of the claw shaped gripping organs (8, 10) on the first frame (6) is adjusted by at least a fourth and a fifth actuator.

9. Tool (2) according to claim 8, **characterized in, that** it comprises a pad (54) on the against the surface (12) of the wind turbine blade/item (4) oriented sides (52) of the claw shaped gripping organs (18, 20, 22, 24), the surface of said pad consist of a non-slip coating.

10. Tool (2) according to anyone of the claims 1-9, **characterized in, that** the up- and down hoisting and handling of an elongated, heavy item such as a wind turbine blade (4) takes place using a single crane wire (40), which by one roll displaces the wire upwards and downwards.

11. Tool (2) according to anyone of the claims 1-10, **characterized in, that** the free ends (58, 60) of the claw shaped gripping organs (18, 20, 22, 24) comprises cooperating locking organs (62, 64, 66, 68, 70) for retaining the gripping organs (8, 10) in the closed, engaged position, where the claw shaped gripping organs (18, 20, 22, 24) encloses the surface (12) of the blade (4) on each side of the largest circumference (26) of the wind turbine blade.

12. Tool (2) according to claim 11, **characterized in, that** at least one part (66) of the cooperating locking organs (62, 64, 66, 70) is displaceable between a first locked outer position, and a second not locked position, by a sixth actuator (68).

13. Tool (2) according to anyone of the claims 1-12, **characterized in, that** the actuators consists of powered pistons driven by a pressurized fluid.

14. Tool (2) according to anyone of the claims 1-12, **characterized in, that** the actuators consists of electric powered spindles and/or electric powered motors.

15. Tool (2) according to anyone of the claims 1-14, **characterized** i**n**, that the tool (2) is equipped with control means, so that all the movements of the actuators and the movements of the yaw, are controllable via a control unit which can be operated from an optional position.

## Patentansprüche

1. Werkzeug (2) zur Handhabung von Blättern (4) für Windkraftanlagen, das einen ersten Rahmen (6) mit einer Verbindungsanordnung (28) umfasst, die aus einem zweiten Rahmen (30) mit Mitteln (38) zur Verbindung mit einem mit einem Kran oder Hebewerk zum Heben des ersten Rahmens und des Blatts (4) verbundenen Seil (40) besteht, wobei der erste Rahmen (6) ferner Greifmittel (8, 10) zum Eingriff mit der Blattoberfläche (12) umfasst, und wobei die Greifmittel aus wenigstens zwei zusammenwirkenden klauenförmigen Gruppen (18, 20, 22, 24) von Greiforganen bestehen, die von ersten Gruppen von Stellantrieben (14, 16) angetrieben werden, wobei jede Gruppe von Greiforganen (18, 20, 22, 24) ein erstes klauenförmiges Organ (18, 22) und ein zweites klauenförmiges Organ (20, 24) umfasst, die in der Eingriffsposition zusammen die Oberfläche (12) des Blatts (4) auf jeder Seite des maximalen Umfangs (26) des Blatts umschließen, **dadurch gekennzeichnet, dass** die aus dem zweiten Rahmen (30) bestehende Verbindungsanordnung (28) ein über erste drehgelagerte Verbindungen (30) drehbar befestigtes Joch (32) umfasst, dessen freies Ende (36) Mittel (38) zur Verbindung mit einem Seil (40) umfasst.

2. Werkzeug (2) nach Anspruch 1, **dadurch gekennzeichnet, dass** der zweite Rahmen (30) im Wesentlichen rechtwinklig von dem ersten Rahmen (6) vorsteht.

3. Werkzeug (2) nach Anspruch 2, **dadurch gekennzeichnet, dass** sich ein zweiter Stellantrieb (44) zwischen dem zweiten Rahmen (30) und dem Joch (32) befindet.

4. Werkzeug (2) nach Anspruch 2 oder Anspruch 3, **dadurch gekennzeichnet, dass** der zweite Rahmen (30) ein Gegengewicht (46) an dem Ende umfasst, das dem Ende gegenüberliegt, an dem der erste Rahmen (6) verbunden ist.

5. Werkzeug (2) nach einem der Ansprüche 1 bis 4, **dadurch gekennzeichnet, dass** sich eine Gierachse (50) zwischen der Verbindungsanordnung (28) und dem ersten Rahmen (6) befindet.

6. Werkzeug nach Anspruch 5, **dadurch gekennzeichnet, dass** die Gierachse (50) hydraulisch betrieben oder von einem dritten Stellantrieb angetrieben ist.

7. Werkzeug (2) nach einem der Ansprüche 1 bis 6, **dadurch gekennzeichnet, dass** die Position der klauenförmigen Greiforgane (8, 10) an dem Rahmen (6) stufenlos verstellbar ist.

8. Werkzeug (2) nach einem der Ansprüche 2 bis 7, **dadurch gekennzeichnet, dass** die Position der klauenförmigen Greiforgane (8, 10) an dem ersten Rahmen (6) durch wenigstens einen vierten und einen fünften Stellantrieb eingestellt wird.

9. Werkzeug (2) nach Anspruch 8, **dadurch gekennzeichnet, dass** es einen Belag (54) auf den gegen die Oberfläche (12) des Blatts/Gegenstands (4) der Windkraftanlage ausgerichteten Seiten (52) der klauenförmigen Greiforgane (18, 20, 22,241 umfasst, wobei die Oberfläche des Belags aus einer rutschfesten Beschichtung besteht.

10. Werkzeug (2) nach einem der Ansprüche 1 bis 9, **dadurch gekennzeichnet, dass** das nach oben und unten gerichtete Heben und Handhaben eines länglichen, schweren Gegenstands, wie zum Beispiel eines Blatts (4) einer Windkraftanlage, unter Verwendung eines einzelnen Kranseils (40) erfolgt, wobei das Seil durch eine Rolle nach oben und nach unten verlagert wird.

11. Werkzeug (2) nach einem der Ansprüche 1 bis 10, **dadurch gekennzeichnet, dass** die freien Enden (58, 60) der klauenförmigen Greiforgane (18, 20, 22, 24) zusammenwirkende Verriegelungsorgane (62, 64, 66, 68, 70) zum Halten der Greiforgane (8, 10) in der geschlossen Eingriffsposition umfassen, wobei die klauenförmigen Greiforgane (18, 20, 22, 24) die Oberfläche (12) des Blatts (4) auf jeder Seite des größten Umfangs (26) des Blatts der Windkraftanlage umschließen.

12. Werkzeug (2) nach Anspruch 11, **dadurch gekennzeichnet, dass** wenigstens ein Teil (66) der zusammenwirkenden Verriegelungsorgane (62, 64, 66, 70) durch einen sechsten Stellantrieb (68) zwischen einer ersten verriegelten äußeren Position und einer zweiten nicht verriegelten Position verlagerbar ist.

13. Werkzeug (2) nach einem der Ansprüche 1 bis 12, **dadurch gekennzeichnet, dass** die Stellantriebe aus Antriebskolben bestehen, die durch eine druckbeaufschlagte Flüssigkeit angetrieben werden.

14. Werkzeug (2) nach einem der Ansprüche 1 bis 12, **dadurch gekennzeichnet, dass** die Stellglieder aus elektrisch betriebenen Wellen und/oder elektrisch betriebenen Motoren bestehen.

15. Werkzeug (2) nach einem der Ansprüche 1 bis 14, **dadurch gekennzeichnet, dass** das Werkzeug (2) mit Steuerungsmitteln ausgestattet ist, so dass alle Bewegungen der Stellantriebe und alle Bewegungen der Gierachse über eine Steuereinheit steuerbar sind, die von einer optionalen Stellung aus betrieben werden kann.

## Revendications

1. Outil (2) de manipulation de pales (4) d'éoliennes, l'outil comprenant un premier cadre (6) doté d'un agencement de liaison (28) qui consiste en un deuxième cadre (30) doté de moyens (38) de liaison à un câble (40) relié à une grue ou à un appareil de levage servant à hisser le premier cadre et la pale (4), ledit premier cadre (6) comprenant en outre des moyens de préhension (8, 10) destinés à venir en prise avec la surface de pale (12), et les moyens de préhension consistant en au moins deux ensembles (18, 20, 22, 24) d'organes de préhension en forme de griffes coopérant entraînés par des premiers ensembles d'actionneurs (14, 16), chaque ensemble d'organes de préhension (18, 20, 22, 24) comprenant un premier organe (18, 22) en forme de griffe et un deuxième organe (20, 24) en forme de griffe, lesquels enserrent conjointement, dans la position d'entrée en prise, la surface (12) de la pale (4) sur chaque côté de la circonférence maximale (26) de la pale, **caractérisé en ce que** l'agencement de liaison (28) qui consiste en le deuxième cadre (30) comprend une fourche (32) montée pivotante par le biais de premières liaisons à palier de pivotement (30), fourche dont l'extrémité libre (36) comprend des moyens (38) de liaison à un câble (40).

2. Outil (2) selon la revendication 1, **caractérisé en ce que** le deuxième cadre (30) fait saillie sensiblement perpendiculairement à partir du premier cadre (6).

3. Outil (2) selon la revendication 2, **caractérisé en ce qu'**un deuxième actionneur (44) est situé entre le deuxième cadre (30) et la fourche (32).

4. Outil (2) selon la revendication 2 ou la revendication 3, **caractérisé en ce que** le deuxième cadre (30) comprend un contrepoids (46) dans l'extrémité opposée à l'extrémité où le premier cadre (6) est relié.

5. Outil (2) selon l'une quelconque des revendications 1 à 4, **caractérisé en ce qu'**un dispositif d'orientation (50) est situé entre l'agencement de liaison (28) et le premier cadre (6).

6. Outil selon la revendication 5, **caractérisé en ce que** le dispositif d'orientation (50) est à commande hydraulique ou est entraîné par un troisième actionneur.

7. Outil (2) selon l'une quelconque des revendications 1 à 6, **caractérisé en ce que** la position, sur le cadre (6), des organes de préhension (8, 10) en forme de griffes est à réglage continu.

8. Outil (2) selon l'une quelconque des revendications 2 à 7, **caractérisé en ce que** la position des organes de préhension (8, 10) en forme de griffes sur le premier cadre (6) est réglée par au moins un quatrième et un cinquième actionneur.

9. Outil (2) selon la revendication 8, **caractérisé en ce qu'**il comprend un tampon (54) sur les côtés (52), orientés contre la surface (12) de l'article/la pale d'éolienne (4), des organes de préhension (18, 20, 22,241 en forme de griffes, la surface dudit tampon consistant en un revêtement anti-glissement.

10. Outil (2) selon l'une quelconque des revendications 1 à 9, **caractérisé en ce que** le hissage et la manipulation vers le haut et vers le bas d'un article lourd allongé tel qu'une pale d'éolienne (4) a lieu en utilisant un seul câble de grue (40), qui, par un roulement, déplace le câble vers le haut et vers le bas.

11. Outil (2) selon l'une quelconque des revendications 1 à 10, **caractérisé en ce que** les extrémités libres (58, 60) des organes de préhension (18, 20, 22, 24) en forme de griffes comprennent des organes de blocage coopérant (62, 64, 66, 68, 70) servant à retenir les organes de préhension (8, 10) dans la position d'entrée en prise fermée, dans laquelle les organes de préhension (18, 20, 22, 24) en forme de griffes enserrent la surface (12) de la pale (4) sur chaque côté de la circonférence la plus grande (26) de la pale d'éolienne.

12. Outil (2) selon la revendication 11, **caractérisé en ce qu'**au moins une partie (66) des organes de blocage coopérant (62, 64, 66, 70) est déplaçable entre une première position extérieure bloquée et une deuxième position non bloquée, par le biais d'un sixième actionneur (68).

13. Outil (2) selon l'une quelconque des revendications 1 à 12, **caractérisé en ce que** les actionneurs consistent en des pistons actionnés entraînés par un fluide sous pression.

14. Outil (2) selon l'une quelconque des revendications 1 à 12, **caractérisé en ce que** les actionneurs consistent en des broches à commande électrique et/ou des moteurs électriques.

15. Outil (2) selon l'une quelconque des revendications 1 à 14, **caractérisé en ce que** l'outil (2) est équipé de moyens de commande, de telle sorte que tous les déplacements des actionneurs et les déplacements du dispositif d'orientation puissent être commandés par le biais d'une unité de commande que l'on peut faire fonctionner à partir d'une position facultative.
